# FASCICULE DE BREVET EUROPEEN

(11) **EP 2 735 547 B1**
(45) Date de publication et mention de la délivrance du brevet: **08.01.2020**
(21) Numéro de dépôt: 13290289.1
(22) Date de dépôt: 20.11.2013
(51) Int. Cl.: C02F 1/46, C02F 1/461

(54) **NOUVEAU PROCÉDÉ DE PRODUCTION D'EAU ALLÉGÉE EN CALCAIRE ET DISPOSITIF DE MISE EN OEUVRE**
NEUES VERFAHREN ZUR ERZEUGUNG VON WENIGER KALKHALTIGEM WASSER UND VORRICHTUNG ZUR UMSETZUNG DIESES VERFAHRENS
NOVEL METHOD FOR PRODUCING WATER WITH REDUCED SCALE CONTENT AND DEVICE FOR IMPLEMENTING SAME

(30) Priorité: 21.11.2012 FR 1203122
(43) Date de publication de la demande: 28.05.2014
(73) Titulaire: Société de Distribution Gaz et Eaux, 25930 Lods (FR)
(72) Inventeur: Danel, Olivier, 92100 Boulogne Billancourt (FR); Fromentin, Régis, 91600 Savigny SUR Orge (FR)
(74) Mandataire: Fonquernie, Sophie Benedicte

(56) Documents cités:
- EP-A2- 2 289 853
- WO-A1-2012/150620
- DE-A1- 19 812 801
- US-A- 3 706 646

## Description

La présente invention concerne un nouveau procédé de production d'eau allégée en calcaire et un dispositif de mise en œuvre.

L'objectif du procédé selon l'invention est de produire une eau allégée en calcaire, et notamment en carbonate de calcium, pour éliminer son pouvoir entartrant, plus particulièrement destinée à être distribuée dans les réseaux d'alimentation en eau potable, notamment destinée à la consommation humaine, mais aussi dans les installations industrielles et domestiques.

Il est rappelé que l'eau contient, en solution, un certain nombre de minéraux, parmi lesquels les bicarbonates de calcium et le calcium, sous forme d'ions Ca⁺⁺ et HCO₃⁻, lequel génère l'ion CO₃⁼.

Il est également rappelé que ces ions sont générateurs du carbonate de calcium lequel est peu soluble, sa solubilité variant en fonction de certains paramètres, tels que notamment la température de l'eau, l'aération, la pression et plus généralement toutes actions qui occasionnent une modification de l'équilibre calco-carbonique ; de plus, selon les conditions, le carbonate de calcium précipite sous différentes formes cristallographiques. Ce carbonate de calcium constitue l'élément essentiel du tartre dont les inconvénients bien connus ne seront pas rappelés dans la présente description.

Le procédé selon la présente invention est un procédé physique, du type utilisant une électrolyse de l'eau à traiter, ladite eau servant d'électrolyte.

Parmi les documents illustrant l'art antérieur, on citera plus particulièrement le brevet français publié sous le n° 2 962 726 dans lequel une insufflation d'air est prévue, destinée à faciliter l'évacuation du CO₂ produit lors de l'électrolyse. Il est à noter que dans ce brevet, les tubes perforés permettant ladite insufflation sont situés sur des tubes disposés parallèlement auxdites anodes et que le débit de l'air est réduit afin d'éviter un brassage intense à l'intérieur du réacteur.

Le brevet US 3 706 646 décrit un réacteur pour l'électrolyse de l'eau, comprenant des anodes et des cathodes, planes et parallèles disposées en alternance ; le calcaire déposé sur les cathodes est régulièrement décroché grâce à de l'air insufflé en dessous des électrodes.

La demande de brevet allemand DE 198 12 801 décrit un réacteur pour l'électrolyse de l'eau, comprenant des anodes et des cathodes, planes et parallèles disposées en alternance ; le calcaire déposé sur les cathodes est régulièrement décroché grâce à de l'air insufflé en dessous des électrodes.

Le procédé selon la présente invention constitue une amélioration substantielle du procédé décrit dans le brevet précité.

Le problème posé dans la présente invention est de permettre un décrochage du calcaire déposé sur les cathodes lors de ladite électrolyse afin d'aboutir à un rendement maximal de ladite électrolyse, le calcaire déposé sur lesdites cathodes constituant un écran au passage du courant électrique.

Différentes techniques ont été testées pour permettre un tel décrochage du calcaire, étant entendu qu'un décrochage manuel est toujours envisageable mais n'entre pas dans le cadre de la présente invention.

A titre d'exemple, une vibration mécanique des électrodes a été envisagée ; dans cette configuration, l'ensemble des cathodes du réacteur est fixé sur une âme centrale mobile. La liaison entre les cathodes et l'âme centrale est réalisée par des plats en polyéthylène haute densité (PEHD). Pour réaliser le décrochage du calcaire, il suffit de tirer sur la partie mobile de l'âme centrale (et ainsi créer un mouvement des cathodes par le plat en PEHD) et de lâcher brusquement. L'extrémité du support va venir taper sur la structure du réacteur, ce qui va générer un choc provoquant le décrochage du calcaire. Toutefois, le décrochage du calcaire par vibration mécanique commune des électrodes ne fonctionne que dans une configuration de traitement particulière. En effet, la taille du réacteur doit être relativement petite pour optimiser la qualité du décrochage et l'amplitude de vibration reste faible.

La technique de l'ultrason a également été testée mais n'a pas donné satisfaction car l'eau a tendance à très nettement réduire, voire annihiler les vibrations générées par les ultrasons ; en outre, ces derniers peuvent également altérer le revêtement des anodes.

Une autre solution a été envisagée consistant en une cathode mobile ; cette solution est basée sur une seule cathode très longue qui serpente autour des anodes. Des axes permettent le retournement de la cathode à chaque anode. Cette cathode mobile est motorisée, ce qui lui génère un mouvement continu. A l'extrémité extérieure au panier dans lequel sont disposées les anodes et la cathode mobile, un racloir permet d'enlever le calcaire de la cathode pour le faire glisser dans une benne prévue à cet effet. Cette solution présente plusieurs inconvénients. En effet, en dehors des problèmes de dégazage du CO₂ en partie haute du retournement de la cathode, il semble évident que le calcaire ne pourra se propager jusqu'au racloir, car à chaque retournement, le calcaire sera décroché et broyé par les axes de retournement. Le calcaire restera donc au niveau des retournements bas de la cathode mobile.

Finalement, la solution retenue préférentiellement est celle de la vibration des cathodes obtenues grâce à l'insufflation d'air, dans certaines conditions, permettant un décrochage efficace du calcaire déposé sur les cathodes.

De façon plus précise, le procédé de production d'eau allégée en calcaire, notamment en carbonate de calcium, du type utilisant une électrolyse de l'eau à traiter, où l'eau est l'électrolyte, est caractérisé en ce qu'il utilise un dispositif comprenant une série de cathodes et d'anodes planes et parallèles disposées en alternance, une arrivée d'air (2), au moins un collecteur (3) raccordé à ladite arrivée d'air (2) et une multiplicité de diffuseurs (4) reliés audit collecteur (3) et munis de perforations (5) à travers lesquelles l'air est insufflé, lesdites cathodes (7) étant constituées d'une tôle inox munie d'un pli (8) prenant en sandwich le support (9) de ladite cathode (7) et d'un pli (11) parallèle au bord inférieur de ladite cathode (7) et à une faible distance dudit bord, où ledit procédé comprend une étape au cours de laquelle il est procédé au décrochage du calcaire déposé sur les cathodes lors de ladite électrolyse, par vibration desdites cathodes, ladite vibration étant réalisée grâce à une insufflation d'air au niveau desdites cathodes, en dessous de ces dernières, et où la vitesse d'arrivée de l'air sur les cathodes se situe entre 10 et 20 m/s, et préférentiellement à 15m/s.

Avantageusement, ladite insufflation a lieu en dessous desdites cathodes, et à titre préférentiel, le débit de l'air insufflé se situe entre 1,5 et 3 m³/h par cathode.

Une étape consistant en la sédimentation et le regroupement du calcaire ainsi décroché dans la partie inférieure du réacteur où a lieu ladite électrolyse, puis une étape au cours de laquelle il est procédé à l'évacuation dudit calcaire hors du réacteur où a lieu ladite électrolyse compléteront très avantageusement l'étape de décrochage du calcaire, aboutissant ainsi à un procédé global de production d'eau allégée en calcaire, notamment en carbonate de calcium.

La présente invention concerne également un dispositif pour la mise en œuvre du procédé précédemment mentionné.

De façon plus précise, ledit dispositif se caractérise en ce qu'il comprend une arrivée d'air, au moins un collecteur raccordé à ladite arrivée d'air et une multiplicité de diffuseurs reliés audit collecteur et munis de perforations à travers lesquels l'air est insufflé.

De façon encore plus précise, lesdits diffuseurs sont disposés perpendiculairement aux cathodes et aux anodes et, avantageusement, lesdites perforations sont disposées sur le dessus de chacun des diffuseurs, à raison d'une perforation par cathode.

La présente invention sera mieux comprise à la lecture de la description qui va suivre faite en regard des figures illustrant le dispositif selon l'invention, parmi lesquelles :
- la Figure 1 représente en vue de dessus les différentes canalisations (canal de distribution, collecteurs, diffuseurs) permettant l'insufflation de l'air ;
- la Figure 2 est une vue en perspective d'une partie du diffuseur ;
- la Figure 3 est une vue en perspective d'une forme préférentielle de cathode ;
- la Figure 4 est une vue en coupe selon AA de la partie supérieure de la cathode illustrée à la Figure 3 ;
- la Figure 5 est une vue de profil de l'anode réalisée selon un mode préférentiel de l'invention ; et
- la Figure 6 est une vue en coupe selon BB de l'anode illustrée à la Figure 5.

En ce qui concerne l'insufflation proprement dite, le matériel utilisé est une soufflante d'air, idéalement à canal latéral à air sec ; l'air utilisé pour l'insufflation est l'air présent dans la station de traitement à température ambiante et un filtre à particule est avantageusement utilisé à l'aspiration.

La pression de l'air est donnée par la hauteur d'eau présente dans le réacteur par rapport au point d'insufflation, soit entre 200 à 250 mbar, idéalement 225 mbar.

Le débit d'air est fonction du volume d'eau du réacteur. Il est égal par réacteur, au volume d'eau de traitement du réacteur multiplié par un coefficient pouvant varier de 15 à 25, idéalement 17. Cela correspond à environ 1,7 à 3 m³/h, et idéalement à 2 m³/h par cathode.

A la sortie de la soufflante d'air, il est indispensable de mettre en place les équipements suivants : un manomètre, une soupape de décharge (tarage à pression de service + 50 mbar minimum) et un clapet anti-retour.

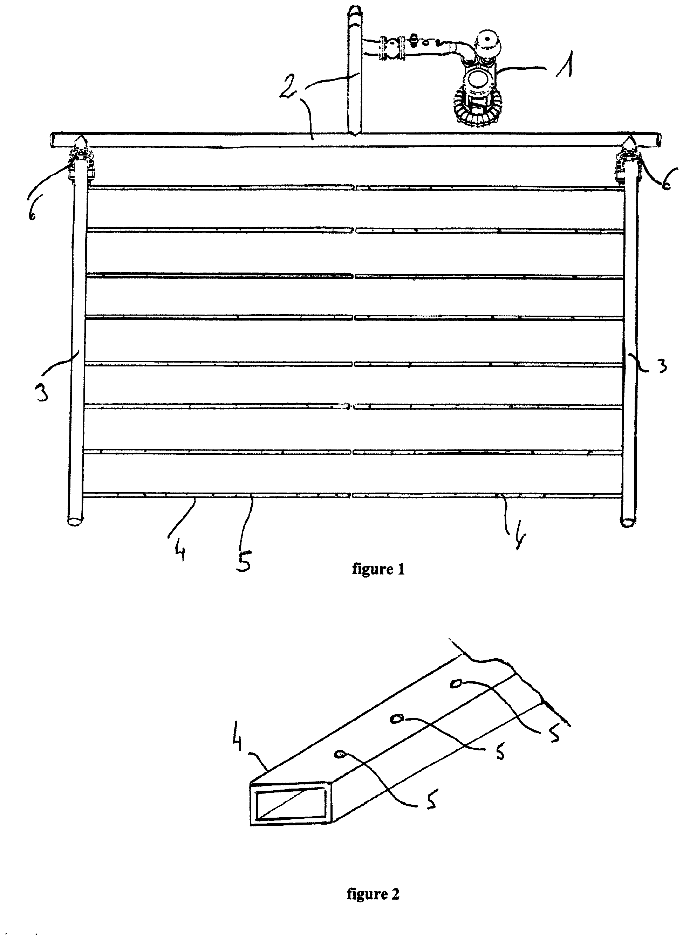

La figure 1 illustre en vue de dessus les éléments permettant l'insufflation de l'air, à savoir une soufflante (1), un canal de distribution de l'air (2), deux collecteurs (3), les diffuseurs (4) reliés aux collecteurs (3) et munis de perforations (5). Dans cette variante préférentielle, il y a deux collecteurs (3) disposés au niveau du réacteur, et à proximité de ses parois latérales ; mais il est possible de prévoir un seul collecteur (3), ou bien une pluralité de ceux-ci. Il est possible de créer plusieurs entrées d'air distinctes par réacteur, ceci afin de diminuer la capacité en termes de débit de la soufflante d'air. Les vitesses de passage dans les collecteurs (3) sont très importantes. Pour les canalisations d'amenée d'air, celle-ci est comprise entre 8 et 15 m/s, idéalement 10 m/s.

Les électrodes, cathodes et anodes en alternance, non représentées dans cette figure, sont disposées perpendiculairement aux diffuseurs (4), de telle sorte que lesdites perforations (5) soient situées juste en dessous des cathodes, une perforation correspondant à chaque cathode.

S'agissant des diffuseurs (4), différents profils peuvent être utilisés : tube inox rond, tube inox carré, tube inox rectangulaire. Préférentiellement, c'est le tube inox rectangulaire qui est choisi car il permet de sélectionner sa section et d'avoir une meilleure répartition axiale des perforations (5).

La figure 2 est une vue en perspective d'une partie du diffuseur (4) muni de perforations (5) avec le profil rectangulaire préférentiel précédemment mentionné.

Comme cela a été précédemment indiqué, le positionnement des diffuseurs (4) est perpendiculaire aux électrodes.

Le nombre de diffuseurs par rangées d'électrodes est compris entre 1 et 3 ; idéalement ce nombre est égal à 2. Les essais ont montré que la mise en place de deux diffuseurs annihilait les effets de bords (extrémité basse de la cathode) par rapport à un seul diffuseur.

La diffusion d'air est réalisée par des perforations (5) sur le diffuseur (4). Celles-ci peuvent être alignées sur un plan horizontal ou vertical du diffuseur (4) ; préférentiellement, ces perforations (5) seront alignées sur un plan vertical, c'est-à-dire sur le dessus du diffuseur (4). A chaque cathode doit correspondre une perforation (5).

Les vitesses de passage de l'air dans les diffuseurs (4) sont très importantes. Elles seront comprises entre 8 et 15 m/s, préférentiellement 10 m/s. Au niveau des perforations (5), celles-ci sont comprises entre 10 et 20 m/s, préférentiellement 15 m/s.

Afin de favoriser le décrochage du calcaire, des phases d'insufflation d'air et d'arrêt se succèdent. L'idéal est d'avoir deux collecteurs d'air (3) par réacteur, ainsi qu'il est illustré à la Figure 1, munis de vannes automatiques (6) qui permettent le basculement de l'un à l'autre tout en laissant fonctionner la soufflante (1).

Dans cette configuration, les phases d'intermittences sont de l'ordre de 5 à 15 secondes, idéalement 10 secondes, avec un fonctionnement global de la soufflante de l'ordre de 10 minutes.

La fermeture brutale d'une vanne automatique (6) permet de générer un mouvement qui est amplifié lors de la réouverture de celle-ci.

L'insufflation de l'air dans les conditions précitées a un impact direct sur la conformation des cathodes et des anodes.

S'agissant des cathodes, leur façonnage a dû être revu pour tenir compte des vibrations générées par l'insufflation d'air. Il a donc fallu déterminer le meilleur compromis entre la rigidité et la souplesse (pour propager la vibration sur l'ensemble de la cathode).

Traditionnellement, chaque cathode est composée d'une tôle inox (ayant par exemple comme dimensions 2000 x 1000 mm avec une épaisseur de 0,5 mm), d'un support (plat inox 25 x 2 longueurs 1034 mm) et d'un connecteur (plat inox 40 x 150 mm avec une épaisseur de 1 mm). L'assemblage traditionnel est réalisé par une soudure par points. Les essais ont permis de mettre en évidence que les points de soudure ne sont pas suffisamment résistants pour assurer un maintien durable compte tenu des vibrations.

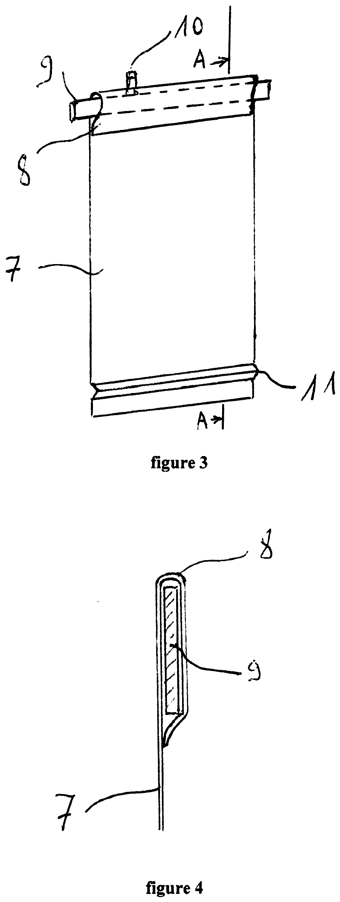

A la suite de nombreux essais infructueux, il a été trouvé une conformation préférentielle de cette cathode ainsi qu'il est illustré à la Figure 3.

Dans cette Figure 3, la cathode (7) est représentée de profil. Dans sa partie supérieure elle forme un pli de retournement (8) prenant en sandwich le support (9) relié au connecteur (10), alors que dans sa partie inférieure, elle est dotée d'un pli (11) parallèle au bord inférieur de la cathode (7) et à une faible distance de ce dernier.

Le façonnage des cathodes doit en effet permettre à la tôle constituant la cathode (7) de se maintenir droite dans le sens de sa largeur. Différents essais de pliage ont permis de déterminer le meilleur formage de la cathode. Celle-ci doit comprendre un pli (11) en partie basse (afin de limiter les contacts avec la tranche de l'anode par « rebiquage » de la cathode) et un pli (8) en partie haute de la cathode (7) pour un effet visuel de parallélisme et éviter les contacts avec le support de l'anode. Les plis (11) sont réalisés par pliage avec des côtes de 20 x 8 mm lorsque la cathode (7) a les dimensions précitées.

Selon une variante d'exécution il est possible de prévoir des plis (11) de tailles différentes, les cathodes présentant un pli important étant disposées en alternance avec les cathodes présentant un pli moins prononcé. Les plis (8) et (11) ont pour intérêt de maintenir une rigidité sur la largeur de la cathode (7) et ainsi propager les vibrations provoquées par l'insufflation d'air jusqu'en haut de ladite cathode (7)

La figure 4 est une vue en coupe selon AA et montre plus en détail la partie supérieure de la cathode (7), où l'on retrouve la cathode (7), le pli de retournement (8) et le support (9) ; l'extrémité du pli de retournement (8) est fixé à la cathode (7) par des points de soudure non représentés ici.

Cette nouvelle configuration permet de ne plus reporter tout le poids de la tôle constituant la cathode (7) sur les points de soudure mais uniquement sur un maintien mécanique, grâce au pli de retournement (8), les points de soudure n'ayant ici qu'un rôle de fermeture de la tôle.

Entre les plis (8) et (11), il n'est pas nécessaire de rigidifier la tôle constituant la cathode (7) ; cette configuration permet en effet de trouver un compromis entre rigidité (pour éviter les contacts avec l'anode) et souplesse (pour que le calcaire se décroche facilement).

Le support (9) de la cathode (7) a également fait l'objet de différents essais. Il est apparu que le support (9) par un plat inox assure le meilleur maintien. Ce support (9) est solidaire du connecteur (10) afin de supprimer les points de soudure cathode (7) / connecteur (10). Ce type de support (9) avec le pli retourné (8) permet d'utiliser les points de soudure uniquement pour la diffusion du courant électrique et de fermeture de la tôle constituant la cathode (7), et non plus comme un report de charge, le poids étant repris par le pli retourné (8).

De même qu'il a fallu revoir la conception des cathodes pour tenir compte des vibrations provoquées par l'insufflation d'air, les anodes ont dû être revues dans leur conception pour les mêmes raisons.

Parmi les anodes habituellement utilisée dans ce domaine, les anodes réalisées en métal déployé (grillage) sont préférées.

Toutefois, de telles anodes sont très souples compte tenu du matériau utilisé et de leur façonnage. Cependant, il est indispensable de les structurer afin de limiter au maximum les contacts potentiels de celles-ci sur les cathodes.

Différents systèmes ont été testés afin de trouver le meilleur système de protection optimisant le fonctionnement du dispositif selon l'invention et par conséquent le décrochage du calcaire déposé sur les cathodes.

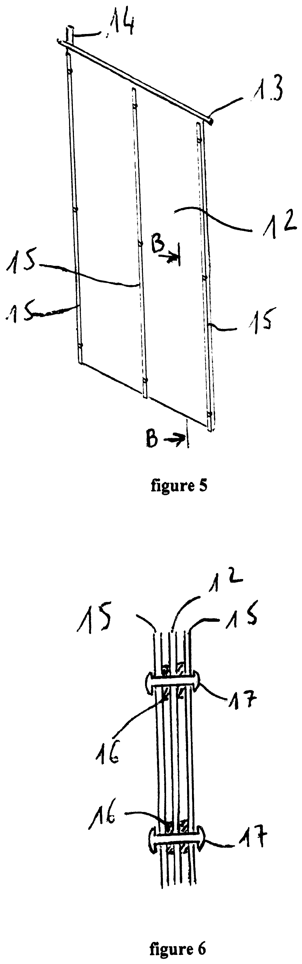

Ainsi une forme préférentielle d'anode a été mise au point, illustrée à la Figure 5 où l'anode (12) est vue de profil ; le bord supérieur de l'anode (12) est prise en sandwich entre deux cornières (13), soudées par points à ladite anode (12) qui comporte en outre un connecteur (14) également soudé par points à ladite anode (12).

En outre, un ensemble de plats en PEHD est prévu, lesdits plats (15) étant disposés sur l'anode afin de la rigidifier.

Avantageusement, ces plats (15) seront disposés parallèlement ainsi que cela apparaît à la Figure 5 et le positionnement des plats (15) sera aligné avec le bas de l'anode (12).

Encore plus avantageusement ces plats (15) seront au nombre de six pour chaque anode (12), disposés deux à deux de façon à prendre l'anode (12) en sandwich, un couple de plat (15) étant disposé sur chacun des bords verticaux de l'anode (12) et un autre couple étant positionné au niveau de son axe médian. Dans cette représentation préférentielle, il y a donc trois couples de plats (15), mais selon les dimensions de l'anode (12) et/ou la souplesse du métal déployé constituant l'anode (12), il sera possible de prévoir davantage de couples de plats (15), outre ceux disposés le long des bords verticaux, parallèles à ces derniers.

En outre, comme cela apparaît à la Figure 6, ces différents plats (15) ne seront pas en contact direct avec l'anode (12), un système de rondelles (16) et de clips (17) les maintenant écartés de ladite anode (12, constituant en quelque sorte une cage à distance du métal déployé constituant l'anode (12).

La structure de l'anode est préférentiellement en titane recouvert d'oxyde d'iridium sous la forme d'un métal déployé. Différents types de maille issue du déployage ont été testées (pour réduire les coûts) mais le meilleur compromis reste les mailles de 30 x 15 lanières 1,4 relaminé en épaisseur 0,8 mm, tant en terme de coût et de fabrication qu'en terme de tension électrique générée.

D'autres matières que le PEHD ont été testées pour les plats (15), par exemple des bandes en verre positionnées horizontalement et verticalement, sans toutefois donner satisfaction tant dans la recherche d'une colle alimentaire que sur le coté cassant du verre. De plus, les tensions provoquées par les contraintes du verre propagent les déformations naturelles du métal déployé ailleurs.

Les paniers d'électrodes sont pourvus au départ et à la fin d'une cathode afin de limiter les effets de bord (le calcaire qui se dépose sur la paroi du réacteur).

En effet, la maintenance est amplement simplifiée si le calcaire n'adhère que sur les cathodes et pas sur la paroi du réacteur (dans ce cas il conviendra de l'enlever par le biais d'une barre métallique).

Selon une variante d'exécution préférentielle non illustrée ici, des supports électrodes seront prévus, réalisés sous forme de profilés en PEHD rainuré, les électrodes étant disposées dans les dites rainures.

Le dispositif qui vient d'être décrit sera avantageusement complété par un système de sédimentation et évacuation du calcaire, ledit système ne faisant pas ici l'objet d'une illustration. La sédimentation du calcaire précédemment décroché des cathodes se fera dans une trémie pyramidale disposée à la base du réacteur. Cette trémie, qui pourra de préférence être amovible afin de pouvoir procéder à un contrôle périodique, présentera au minimum une pente comprise entre 30 et 50°, et préférentiellement de 40°. En outre, à la base de cette trémie, on disposera une réduction dont la pente sera supérieure à 40°. De cette façon, le calcaire se regroupera au fond de la trémie et de sa réduction et pourra être évacué avec un volume d'eau limité. Cette évacuation se fera notamment au travers d'une vanne à manchon pneumatique qui permet un passage intégral. Ainsi le mélange d'eau et de calcaire ne rencontre pas d'interstices qui pourraient freiner l'écoulement des plus grosses plaques de calcaire. Une pompe à vortex complétera utilement ce système d'évacuation, ladite pompe permet ainsi le transfert du calcaire en limitant les pertes de charges et en assurant une longévité de la roue.

Il est bien entendu possible d'utiliser un seul système d'évacuation relié à plusieurs systèmes de sédimentation ; plusieurs trémies et vannes à manchons peuvent ainsi être reliées à une même pompe, mais dans ce cas, l'ouverture des vannes doit se faire de façon cadencée pour éviter les passages préférentiels et les bouchons que cela génère.

## Revendications

1. Procédé de production d'eau allégée en calcaire, notamment en carbonate de calcium, utilisant une électrolyse de l'eau à traiter, où l'eau est l'électrolyte, **caractérisé en ce qu'**il utilise un dispositif comprenant une série de cathodes (7) et d'anodes (12) planes et parallèles disposées en alternance, une arrivée d'air (2), au moins un collecteur (3) raccordé à ladite arrivée d'air (2) et une multiplicité de diffuseurs (4) reliés audit collecteur (3) et munis de perforations (5) à travers lesquelles l'air est insufflé, lesdites cathodes (7) étant constituées d'une tôle inox munie d'un pli (8) prenant en sandwich le support (9) de ladite cathode (7) et d'un pli (11) parallèle au bord inférieur de ladite cathode (7) et à une faible distance dudit bord, où ledit procédé comprend une étape au cours de laquelle il est procédé au décrochage du calcaire déposé sur les cathodes lors de ladite électrolyse, par vibration desdites cathodes, ladite vibration étant réalisée grâce à une insufflation d'air au niveau desdites cathodes, en dessous de ces dernières, et où la vitesse d'arrivée de l'air sur les cathodes se situe entre 10 et 20 m/s, et préférentiellement à 15 m/s.

2. Procédé selon la revendication 1, **caractérisé en ce que** le débit de l'air insufflé se situe entre 1,7 et 3 m³/h par cathode.

3. Procédé selon l'une des revendications 1 ou 2, **caractérisé en ce qu'**il comprend en outre une étape consistant en la sédimentation et le regroupement du calcaire ainsi décroché dans la partie inférieure du dispositif où a lieu ladite électrolyse.

4. Procédé selon l'une quelconque des revendications 1 à 3, **caractérisé en ce qu'**il comprend une étape supplémentaire au cours de laquelle il est procédé à l'évacuation dudit calcaire hors du réacteur où a lieu ladite électrolyse.

5. Dispositif pour la mise en œuvre du procédé selon l'une quelconque des revendications 1 à 4, **caractérisé en ce que** lesdits diffuseurs (4) sont disposés perpendiculairement aux cathodes (7) et aux anodes (12).

6. Dispositif selon la revendication 5, **caractérisé en ce que** lesdites perforations (5) sont disposées sur le dessus de chacun des diffuseurs (4), une perforation (5) correspondant à chaque cathode (7).

7. Dispositif selon l'une des revendications 5 ou 6, **caractérisé en ce que** les anodes (12) sont réalisées en un métal déployé et comportent des plats (15) disposés de part et d'autre desdites anodes (12) et prenant en sandwich ces dernières au niveau de chacun des bords verticaux desdites anodes (12).

8. Dispositif selon la revendication 7, **caractérisé en ce qu'**il comporte un ou plusieurs autres couples de plats (15) disposés parallèlement à ceux situés au niveau de chacun des bords verticaux desdites anodes (12), un tel couple de plats (15) étant disposé selon l'axe médian de ladite anode (12).

9. Dispositif selon l'une des revendications 7 ou 8, **caractérisé en ce que** lesdits plats (15) sont maintenus écartés desdites anodes (12) par un système de rondelles (16) et de clips (17).

10. Dispositif selon l'une quelconque des revendications 5 à 9, **caractérisé en ce que** le bord supérieur de l'anode (12) est pris en sandwich entre deux cornières (13) et est relié à un connecteur (14).

11. Dispositif selon l'une quelconque des revendications 5 à 10, **caractérisé en ce qu'**il comporte en outre des moyens permettant la sédimentation du calcaire après décrochage des cathodes (7), lesdits moyens étant constitués d'une trémie dont la pente présente un angle compris entre 30 et 50°, et préférentiellement de 40°.

12. Dispositif selon l'une quelconque des revendications 5 à 11, **caractérisé en ce qu'**il comporte en outre des moyens permettant l'évacuation dudit calcaire, lesdits moyens étant constitués d'une vanne à manchon et d'une pompe à vortex.

## Patentansprüche

1. Verfahren zum Erzeugen von weniger kalkhaltigem Wasser, insbesondere von weniger kalziumkarbonathaltigem Wasser, verwendend eine Elektrolyse des zu behandelnden Wassers, wobei das Wasser das Elektrolyt ist, **dadurch gekennzeichnet, dass** es eine Vorrichtung verwendet, welche eine Reihe von ebenen und parallelen Kathoden (7) und Anoden (12) verwendet, welche abwechselnd angeordnet sind, einen Lufteinlass (2), mindestens einen Sammler (3), welcher an den Lufteinlass (2) angeschlossen ist, und eine Vielzahl von Diffusoren (4), welche mit dem Sammler (3) verbunden und mit Perforationen (5) versehen ist, durch welche Luft eingeblasen wird, wobei die Kathoden (7) aus einem Blech aus rostfreiem Edelstahl bestehen, welches mit einem Falz (8), welcher den Träger (9) der Elektrode (7) sandwichartig umgibt und mit einer Falte (11) versehen ist, welcher parallel zum unteren Rand der Katode (7) und in geringem Abstand zum Rand angeordnet ist, wobei das Verfahren einen Schritt beinhaltet, in dessen Verlauf ein Ablösen des an den Kathoden im Zuge der Elektrolyse abgelagerten Kalks durch Vibration der Kathoden vorgenommen wird, wobei die Vibration dank einem Einblasen von Luft auf der Höhe der Kathoden, unter diesen letzteren, erzeugt wird, und wobei die Luftvorlaufgeschwindigkeit an den Kathoden zwischen 10 und 20 m/s, und vorzugsweise 15 m/s beträgt.

2. Verfahren nach Anspruch 1, **dadurch gekennzeichnet, dass** der Durchfluss an eingeblasener Luft zwischen 1,7 und 3 m³/h pro Kathode beträgt.

3. Verfahren nach einem der Ansprüche 1 oder 2, **dadurch gekennzeichnet, dass** es zudem einen Schritt beinhaltet, welcher im Sedimentieren und Zusammenführen des so gelösten Kalks in dem unteren Teil der Vorrichtung, in welchem die Elektrolyse stattfindet, besteht.

4. Verfahren nach einem der Ansprüche 1 bis 3, **dadurch gekennzeichnet, dass** es einen zusätzlichen Schritt beinhaltet, in dessen Verlauf ein Austragen des Kalks außerhalb des Reaktors, in welchem die Elektrolyse stattfindet, erfolgt.

5. Vorrichtung zur Umsetzung des Verfahrens nach einem der Ansprüche 1 bis 4, **dadurch gekennzeichnet, dass** die Diffusoren (4) rechtwinklig zu den Kathoden (7) und zu den Anoden (12) angeordnet sind.

6. Vorrichtung nach Anspruch 5, **dadurch gekennzeichnet, dass** die Perforationen (5) auf der Oberseite eines jeden der Diffusoren (4) angeordnet sind, wobei eine Perforation (5) einer jeden Kathode (7) entspricht.

7. Vorrichtung nach einem der Ansprüche 5 oder 6, **dadurch gekennzeichnet, dass** die Anoden (12) aus einem gestreckten Metall gefertigt sind und Abflachungen (15) beinhalten, welche beiderseits der Anoden (12) angeordnet sind und letztere sandwichartig auf der Höhe der vertikalen Ränder der Anoden (12) umgeben.

8. Vorrichtung nach Anspruch 7, **dadurch gekennzeichnet, dass** sie ein oder mehrere Paare von Abflachungen (15) beinhaltet, welche parallel zu denjenigen angeordnet sind, welches sich auf der Höhe eines jeden der vertikalen Ränder der Anoden (12) befinden, wobei ein solches Paar Abflachungen (15) entlang der Mittelachse der Anode (12) angeordnet ist.

9. Vorrichtung nach einem der Ansprüche 7 oder 8, **dadurch gekennzeichnet, dass** die Abflachungen (15) von den Anoden (12) durch ein System von Unterlegscheiben (16) und Clips (17) entfernt gehalten werden.

10. Vorrichtung nach einem der Ansprüche 5 bis 9, **dadurch gekennzeichnet, dass** der obere Rand der Anode (12) sandwichartig von zwei Winkelblechen (13) umgeben und mit einem Verbindungselement (14) verbunden ist.

11. Vorrichtung nach einem der Ansprüche 5 bis 10, **dadurch gekennzeichnet, dass** sie zudem Mittel beinhaltet, welche das Sedimentieren des Kalks nach dem Lösen von den Kathoden (7) ermöglichen, wobei die Mittel aus einem Bunker bestehen, dessen Neigung einen Winkel zwischen 30° und 50°, und vorzugsweise von 40° aufweist.

12. Vorrichtung nach einem der Ansprüche 5 bis 11, **dadurch gekennzeichnet, dass** sie zudem Mittel beinhaltet, welche das Austragen des Kalks ermöglichen, wobei die Mittel aus einem Ventil mit Manschette und einer Vortexpumpe bestehen.

## Claims

1. Method for producing water with reduced lime scale, in particular calcium carbonate, using electrolysis of the water to be treated, where the water is the electrolyte, **characterised in that** it uses a device comprising a series of plane and parallel cathodes (7) and anodes (12) arranged alternatingly, an air inlet (2), at least one manifold (3) connected to said air inlet (2) and a plurality of diffusers (4) connected to said manifold (3) and provided with holes (5) through which air is injected, said cathodes (7) being formed of a stainless steel sheet provided with a fold (8) sandwiching the support (9) of said cathode (7) and with a crease (11) parallel to the lower edge of said cathode (7) and at a small distance from said edge, where said method comprises a step during which there is removal of the lime scale deposited on the cathodes during said electrolysis, by vibration of said cathodes, said vibration being implemented thanks to an injection of air at the level of said cathodes, below these latter, and where the arrival rate of the air on the cathodes is between 10 and 20 m/s, and preferably at 15 m/s.

2. Method according to claim 1, **characterised in that** the throughput of the injected air is between 1.7 and 3 m³/h per cathode.

3. Method according to one of claims 1 or 2, **characterised in that** it further comprises a step consisting of the sedimentation and consolidation of the thus removed lime scale in the lower part of the device where said electrolysis takes place.

4. Method according to any one of claims 1 to 3, **characterised in that** it comprises an additional step during which there is evacuation of said lime scale outside of the reactor where said electrolysis takes place.

5. Device for implementing the method according to any one of claims 1 to 4, **characterised in that** said diffusers (4) are arranged perpendicularly to the cathodes (7) and anodes (12).

6. Device according to claim 5, **characterised in that** said holes (5) are arranged on the top of each of the diffusers (4), a hole (5) corresponding to each cathode (7).

7. Device according to one of claims 5 or 6, **characterised in that** the anodes (12) are made of an expanded metal and comprise flats (15) arranged on either side of said anodes (12) and sandwiching the latter at the level of each of the vertical edges of said anodes (12).

8. Device according to claim 7, **characterised in that** it comprises one or more other pairs of flats (15) arranged parallel to those positioned at the level of each of the vertical edges of said anodes (12), such a pair of flats (15) being arranged along the central axis of said anode (12).

9. Device according to one of claims 7 or 8, **characterised in that** said flats (15) are kept isolated from said anodes (12) by a system of washers (16) and clips (17).

10. Device according to any one of claims 5 to 9, **characterised in that** the upper edge of the anode (12) is sandwiched between two brackets (13) and is connected to a connector (14).

11. Device according to any one of claims 5 to 10, **characterised in that** it further comprises means allowing for the sedimentation of lime scale after removal from the cathodes (7), said means being formed of a hopper of which the gradient presents an angle between 30° and 50°, and preferably 40°.

12. Device according to any one of claims 5 to 11, **characterised in that** it further comprises means allowing for the evacuation of said lime scale, said means being formed of a sleeve valve and a vortex pump.
